# EUROPEAN PATENT SPECIFICATION

(11) **EP 0 924 988 B1**
(45) Date of publication and mention of the grant of the patent: **10.09.2003**
(21) Application number: 97954826.0
(22) Date of filing: 17.12.1997
(51) Int. Cl.: A21D 10/02, A21D 13/08, A21D 6/00

(54) **READY-TO-USE COOKIE DOUGH**
BACKFERTIGER KEKSTEIG
PATE A COOKIES PRETE A L'EMPLOI

(30) Priority: 19.12.1996 EP 96203630
(43) Date of publication of application: 30.06.1999
(73) Proprietor: SOCIETE DES PRODUITS NESTLE S.A., 1800 Vevey (CH)
(72) Inventor: BLASCHKE, Dieter, CH-1814 La Tour-de-Peilz (CH); NAIRN, Peter, CH-1806 Saint-Légier (CH)
(74) Representative: Thomas, Alain
(86) International application number: EP9707190
(87) International publication number: WO98026666

(56) References cited:
- EP-A- 0 084 210
- EP-A- 0 145 550
- EP-A- 0 214 707
- WO-A-90/01877
- DE-U- 9 417 488
- US-A- 5 171 599
- Hess, Olga and Adolf, Wiener Küche, Wien 1913, reprint 1986, p.1429

## Description

The invention relates to a ready-for-use cookie dough which can be preserved in the refrigerator and which is prepared from flour, sugar, baking powder and fat.

Cookie doughs already exist on the market. This dough exists in tubular form or it is packaged in a cup. During use, the consumer should use a spoon or a knife and form the cookie in circular form before baking it, which requires manipulation of the dough. If the packaging of this cookie dough is made in the form of a block, a forming device is needed in order to give the cookie the desired circular form. In this case, the forming leaves pieces which must then be reworked.

The aim of the present invention is to provide the consumer with a ready-for-baking cookie dough which does not require any manipulation during use and which does not leave any dough part to be recycled.

The invention relates to a ready-for-use cookie dough as defined in claim 1.

The cookie dough according to the invention is provided in the form of a block. This block may be either of parallelepipedal form or of prismatic form.

It has been observed that if a dough is used which has a baking powder content as mentioned above, it can be cut in the form of parallelepipedal, circular or prismatic dice and that these forms deposited on a baking tray and placed in the oven for baking flow during the said baking to give cookies having a circular form.

To do this, it is necessary to have a block of dough in which either an imprint or a precut has been made so as to facilitate breaking in order to make small dice which are placed directly for oven baking. It is therefore sufficient to have a knife with which cuts are made fully in the grooves, or the dice, the triangular pieces are even simply pulled out if they are already precut. There is thus no waste due to forming and no manipulation, other than cutting, on the part of the consumer.

In the present description, the contents are given by weight. Baking powder is understood to mean a mixture of at least one bicarbonate or carbonate salt, at least one acidifying agent and at least one separating agent. None of the constituents, of this mixture is critical. Sodium bicarbonate is preferably used with sodium diphosphate or disodium dihydrogen pyrophosphate with a starch as separating agent. These mixtures are directly available commercially with a fixed composition. For example, the bicarbonate is present in an amount of 30%, the acid in an amount of 40% and the separating agent in an amount of 30%. In a specific embodiment, it is also possible to use only sodium bicarbonate, in an amount of up to 0.7%, preferably 0.5%.

The flour used is a cereal flour with a high content or with a lower content of proteins. Any type of flour can be taken into consideration. The flour content is normally between 10 and 40%, preferably between 27 and 34%.

The sugar used is not critical. Its content is between 10 and 40%. The sugars which can be used are fructose, sucrose, dextrose and maize syrup. Sucrose is preferred, for example in the form of granulated sugar. The dough should have a good resistance during preservation in the refrigerator, that is to say that it should be quite hard, but should nevertheless spread well during baking so as to develop in a circular form. It is with sucrose that this result is best achieved. It is also necessary to have a dough having a water content of the order of 6 to 9%. In order to increase the sugar content, it is also possible to add a sugar substitute such as sorbitol or any other substitute.

The fat used in the dough composition according to the invention is a solid or liquid fat at room temperature. It can be of animal or plant origin, for example lard, tallow, margarine, maize oil, copra oil, palm oil, sunflower oil, soya bean oil. It is also possible to use fat mixtures. These fats are emulsified or stabilized with mono- or diglycerides or other emulsifiers known in the art. For example, according to the invention, margarine which already contains the emulsifier is used. The fat content is between 10 and 25%. The type of fat used also has an influence on the flow capacity of the dough during baking.

As texturing agent, whole egg or egg white at a content of between 0 and 10% is used, preferably at a content of 2 to 5%.

The dough according to the invention also contains flavouring agents, such as vanilla flavour and cocoa powder.

This dough may finally also contain chocolate in the form of pieces, pieces of oat flakes or groundnut pieces. It is also possible to have pieces or whole hazel nuts. The size of these pieces is not critical and may vary between 1 and 10 mm. Dark, milk or white chocolate may be used. The content of chocolate is between 10 and 30%. The chocolate used is a commercial chocolate or a chocolate which can be used in pastry making or in catering.

It is very convenient according to the invention to have a block of dough already having the correct thickness in order to avoid having to further roll out the said dough. To this effect, a -block is obtained which has a thickness of between 1 and 3 cm.

As regards the precut of dough block, it is envisaged so as to make it into parallelepipedal dice of between 3 and 4 cm in size and 1 to 3 cm thick. In the case of a prismatic block, a thickness of between 1 and 3 cm and an equilateral triangle with 3 to 6 cm sides are always envisaged.

For the block having grooves, these are not critical as regards their sizes. Grooves are normally provided which have a width of the order of 1 to 5 mm and an identical depth. In this case, the consumer should either break the dice like for a chocolate bar, or he uses a knife to finish the cutting along the said grooves.

As a practical embodiment, there may be mentioned with a dough thickness of 2 cm, the possibility of making 3.5 x 3.5 cm dice. For a block of 300 g, there would be 3 x 3 dice, for a block of 400 g, 3 x 4 dice and for a block of 500 g, 3 x 5 dice.

When the dice are ready, they are arranged on an oven tray and the baking is carried out conventionally, that is to say at a temperature of 180° C for 12 to 18 minutes. After baking, a cookie having a diameter of 7 cm is obtained for dice of 3.3 x 3.5 cm.

Cookies which are quite round are obtained by virtue of the dough according to the invention using dice whose form is substantially square.

The block of dough is wrapped conventionally, for example in a wrapping based on synthetic material or based on covered carton, so as to be protected from air and moisture. The shelf life of the dough according to the invention in a refrigerator is normally of the order of several months.

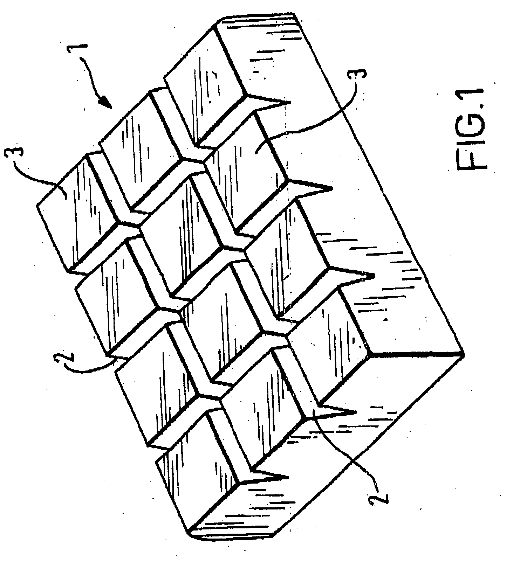

The remainder of the description is made with reference to the single figure representing a parallelepipedal block of cookie dough.

The block (1) of cookie dough is prepared with the composition as stated in the following examples. The preparation is made conventionally and when the block is formed, marker rolls which make it possible to form the grooves (2) are made to pass over it. The choice therefore exists either to make only the imprints, or to make a complete cut. At the time of use, it is sufficient to break off one by one, the various dice formed and to place them on a tray to put in the oven.

The remainder of the description is made with reference to the examples.

### Examples 1 to 4

The various ingredients stated in the table below are mixed: the proportions are in % by weight.

| Example | 1 | 2 | 3 | 4 |
|---|---|---|---|---|
| Sugar | 33.5 | 34 | 33.8 | 34.1 |
| Whole egg | 3.5 | 3.5 | 3.5 | 3.5 |
| Baking powder | 0.7 | 1.00 | 1.5 | 1.5 |
| Salt | 0.3 | 0.3 | 0.3 | 0.3 |
| Fat | 12.8 | 12.9 | 12.8 | 13 |
| Water | 4.4 | 3.2 | 3.2 | 2.1 |
| Flavourings | 0.6 | 0.5 | 0.6 | 0.7 |
| Flour | 28 | 28.3 | 28.1 | 28.4 |
| Chocolate pieces | 16.2 | 16.3 | 16.2 | 16.4 |

The dough thus prepared is stored for 3 weeks in the refrigerator and 3.5 x 3.5 cm cookies are then made. After baking for 16 minutes at 180° C, cookies 7 cm in diameter are obtained.

For Example 1, the dough is considered too soft, for Examples 2 and 3, it is a little soft and for the last example, the consistency is judged to be good, in the light of the possibility of manufacturing the said dough on an existing production line. In the 4 cases, the dough dice flows in a manner which is quite circular.

## Claims

1. Ready-for-use cookie dough (1) of parallelepipedal or prismatic form which can be preserved in the refrigerator and which is prepared from flour, sugar, baking powder and fat, which contains between 0.3 and 1.5% baking powder, **characterized in that** it is provided in a precut form or in a form having grooves (2), said precut form or form having grooves defining small dice pieces (3) to be broken off and **characterized in that** it contains between 6 and 9% water.

2. Cookie dough according to Claim 1, **characterized in that** it contains between 10 and 30% chocolate in the form of pieces.

3. Cookie dough according to one of Claims 1 or 2 **characterized in that** it contains between 2 and 5% whole egg or egg white.

4. Cookie dough according to one of Claims 1 to 3, **characterized in that** it has a thickness of between 1 and 3 cm.

5. Cookie dough according to one of Claims 1 to 4, **characterized in that** in the case of the parallelepipedal block, the dice have a parallelepipedal form of between 3 and 4 cm in size and 1 and 2 cm thick.

## Patentansprüche

1. Gebrauchsfertige Plätzchenteig (1) von Parallelepipedoder Prismaform, der im Kühlschrank aufbewahrt werden kann und der hergestellt ist aus Mehl, Zucker, Backpulver und Fett, der zwischen 0,3 und 1,5% Backpulver enthält, **dadurch gekennzeichnet, daß** er in einer vorgeschnittenen Form oder in einer Form mit Einschnitten (2) bereitgestellt wird, wobei die genannte vorgeschnittene Form oder die Form mit Einschnitten kleine würfelartige Stücke (3) definieren, die abzubrechen sind, und er zwischen 6 und 9% Wasser enthält.

2. Plätzchenteig nach Anspruch 1, **dadurch gekennzeichnet, daß** er zwischen 10 und 30% Schokolade in der Form von Stücken enthält.

3. Plätzchenteig nach einem der Ansprüche 1 oder 2, **dadurch gekennzeichnet, daß** er zwischen 2 und 5% Vollei oder Eiweiß enthält.

4. Plätzchenteig nach irgendeinem der Ansprüche 1 bis 3, **dadurch gekennzeichnet, daß** er eine Dicke zwischen 1 und 3 cm aufweist.

5. Plätzchenteig nach irgendeinem der Ansprüche 1 bis 4, **dadurch gekennzeichnet, daß** im Falle des Parallelepiped-Blocks das würfelartige Stück eine Parallelepipedform von zwischen 3 und 4 cm Größe und 1 und 2 cm Dicke aufweist.

## Revendications

1. Pâte prête à l'emploi pour petits gâteaux (1), de forme parallélépipédique ou prismatique, qui peut être conservée au réfrigérateur et qui est préparée à partir de farine, de sucre, de poudre levante et de matière grasse, qui contient 0,3 à 1,5 % de poudre levante, **caractérisée en ce qu'**elle est fournie sous une forme prédécoupée ou sous une forme comportant des rainures (2), ladite forme prédécoupée ou forme comportant des rainures définissant de petits morceaux consistant en dés (3) à séparer, et qui contient 6 à 9 % d'eau.

2. Pâte pour petits gâteaux suivant la revendication 1, **caractérisée en ce qu'**elle contient 10 à 30 % de chocolat sous forme de morceaux.

3. Pâte pour petits gâteaux suivant l'une des revendications 1 et 2, **caractérisée en ce qu'**elle contient 2 à 5 % d'oeufs entiers ou de blanc d'oeuf.

4. Pâte pour petits gâteaux suivant l'une des revendications 1 à 3, **caractérisée en ce qu'**elle a une épaisseur de 1 à 3 cm.

5. Pâte pour petits gâteaux suivant l'une des revendications 1 à 4, **caractérisée en ce que**, dans le cas du bloc parallélépipédique, le dé a une forme parallélépipédique ayant des dimensions de 3 à 4 cm et une épaisseur de 1 à 2 cm.
